# EUROPÄISCHE PATENTSCHRIFT

(11) **EP 3 406 319 B1**
(45) Veröffentlichungstag und Bekanntmachung des Hinweises auf die Patenterteilung: **21.07.2021**
(21) Anmeldenummer: 18170859.5
(22) Anmeldetag: 04.05.2018
(51) Int. Cl.: B01D 53/34, B01D 53/52, B01D 53/58, B01D 53/78

(54) **VERFAHREN ZUM BETRIEB EINES CHEMISCHEN ABLUFTWÄSCHERS**
METHOD FOR OPERATING A CHEMICAL GAS SCRUBBER
PROCÉDÉ DE FONCTIONNEMENT D'UN LAVEUR CHIMIQUE D'AIR POLLUÉ

(30) Priorität: 04.05.2017 DE 102017109562
(43) Veröffentlichungstag der Anmeldung: 28.11.2018
(73) Patentinhaber: Schönhammer, Martin, 84152 Mengkofen (DE)
(72) Erfinder: Schönhammer, Martin, 84152 Mengkofen (DE)
(74) Vertreter: Engelhard, Markus

(56) Entgegenhaltungen:
- EP-A1- 0 516 205
- EP-A1- 1 318 105
- EP-A1- 2 239 030
- WO-A1-2004/011127
- DE-A1-102008 058 114
- NL-C2- 2 001 538
- US-A- 5 757 660
- US-A1- 2016 250 589

## Beschreibung

Die Erfindung bezieht sich auf ein Verfahren zum Betrieb eines chemischen Gaswäschers, der von einem mehrere Gase enthaltenden, insbesondere aus einem Lagerort organischer Materialien austretenden Gasstrom durchsetzt wird, zum Entzug eines aus dem Gasstrom zu extrahierenden Gases, wobei man den Gasstrom mit einem Waschwasser kontaktiert, dem laufend eine mit dem zu extrahierenden Gas chemisch reagierende Chemikalie zudosiert wird, die einen pH-Wert außerhalb des Bereichs 4 bis 10 hat, also einer Säure oder einer Base, und die dann mit dem zu extrahierenden Gas unter Bildung eines im Waschwasser gelösten Salzes reagiert, und man das Waschwasser bei Erreichen einer Salzkonzentration, die noch vor dem Auskristallisieren des Salzes liegt, zumindest teilweise ableitet und im laufenden Betrieb dann wieder mit Frischwasser auffüllt. Das Verfahren ist insbesondere bei der Extraktion von Ammoniak NH₃ aus Abluft z. B. eines Gärrest-Trockners oder vom Schwefelwasserstoff H₂S aus stinkender Abluft anwendbar.

Die Abluft von z. B. dem Gärrest einer Biogasanlage oder von Tierexkrementen etwa aus der Schweinehaltung enthält Ammoniak, also ein Gas, das nicht in die Reichweite von Siedlungen oder empfindlichen Biotopen geraten darf. Es ist also eine Abluftreinigung erforderlich. Hierzu sind verschiedene Techniken bekannt, z. B. aus dem Fachartikel "Abluftreinigung in der Schweinehaltung" von KTBL - Kuratorium für Technik und Bauwesen in der Landwirtschaft, Darmstadt - Schrift 451, Abluftreinigung für Tierhaltungsanlagen - Verfahren, Leistungen, Kosten. NL 2 001 538 C2 bezieht sich auf ein Waschsystem. DE 10 2008 058114 A1 offenbart ein Verfahren zur Reinigung von Rohgasen, insbesondere von Biogas, sowie eine Gasreinigungsanlage. US 2016/0250589 A1 bezieht sich auf ein Verfahren zum Entfernen von Ammoniak aus einem Gasstrom. EP 2 239 030 A1 offenbart ein Verfahren zum Rückgewinnen von Ammoniak aus verdauten Abfällen. US 5 757 660 bezieht sich auf ein Waschkontrollsystem. EP 0 516 205 A1 offenbart ein Verfahren zum Regeln des pH-Wertes einer sauren Waschflüssigkeit. Weitere Literatur zum Stand der Technik findet sich auf der Internetseite (2017) https://www.ktbl.de/fileadmin/user upload/artikel/Tierhaltung/Allgemeines/Abluftreinigung/a bluftreinigung.pfdf. Bei der chemischen Abluftwäsche wird die ammoniakhaltige Abluft mit Schwefelsäure H₂SO₄, die in das Waschwasser eindosiert worden ist, in Kontakt gebracht, wodurch das Ammoniak zu Ammoniumsulfat reagiert. Entsprechende chemische Luftwäscher sind im Handel, z. B. der chemische Luftwäscher der Firma Schönhammer GmbH, und verschiedene Prinzipien chemischer Gaswäsche sind z. B. bekannt aus DE 10119991, EP 08555557509, EP 2038045 und WO 2004054688. Das resultierende ammoniumsulfathaltige Wasser erscheint grundsätzlich als Düngemittel geeignet, ist aber tatsächlich aufgrund der darin noch verbliebenen Schwefelsäure für diesen Zweck doch noch so sauer, dass empfindliche Pflanzen durch es verätzt werden. Beispielsweise nennt die Publikation DE69532275T2 (The Regents of the University of California) im Absatz [0028] als Verträglichkeitsgrenzen für Pflanzen die pH-Werte 5,0 und 8,0; Römpp, Chemie Lexikon, 1995,gibt unter dem Stichwort "pH" für Zellen des menschlichen Gewebes "den verhältnismäßig engen pH-Bereich von etwa 3 - 8" an, was auch auf andere lebende Zellen anwendbar ist. Das säurehaltige Waschwasser ist auch sehr korrosiv. Um die verbliebene Schwefelsäure daraus zu entfernen, ist es z. B. aus WO 2015004146 (vergl. Element 209 und Anspruch 8) bekannt, eine Neutralisierung durch basische Materialien durchzuführen. Die WO 2004/011127 offenbart ein weitere Gaswäsche des Standes der Technik, wobei abgeleitetes Waschwasser als Düngemittel zu Verfügung gestellt wird.

Soll das Waschwasser direkt als Pflanzendünger (ohne Vermischung mit Gärrest bzw. Gülle) genutzt werden, so muss sich, wie dargelegt, der pH-Wert in einem für die Pflanzen verträglichen Bereich befinden, um Verätzungsschäden zu vermeiden und die Nährstoffaufnahme der Pflanzen nicht zu behindern, also vorzugsweise in einem Bereich von pH 5.0-8.5). Dabei ist auch noch die Art des Bodens ausschlaggebend. Die Verträglichkeitsgrenze bei der Verwendung des Waschwassers als Flüssigdünger hängt von der Struktur des zu düngenden Bodens und von der darauf stehenden Kultur ab. Entsprechende Werte sind dem Fachmann bekannt. Es wird beispielsweist verwiesen auf die Internetstelle (2017) https//de.wikipedia.org/wiki/Boden-pH. Der Dünger soll den pH-Wert des Bodens einem Optimum für die betreffende Kultur annähern und somit selbst in einem Bereich nahe diesem Optimum liegen. In der genannten Literaturstelle wird dargelegt (Zitat): "Die Mehrheit der Feldfrüchte bevorzugt einen neutralen oder leicht sauren Boden, da die Löslichkeit der meisten Nährstoffe für gesundes Wachstum der Pflanzen bei pH-Werten zwischen 6,3 und 6,8 am höchsten ist." Als Beispiele sind dort für verschiedene Anbaukulturen u. a. genannt: Erdbeeren 5,0 bis 6,0; Mais 5,5 bis 7,0; Weizen 5,5 bis 7,5.

Das Waschwasser kann aber auch in den Bereich der organischen Materialien, also im Fall einer Biogasanlage zum Gärrest/Gülle, von dem das gewaschene Gas ausgegangen ist, zurückgeleitet und mit ihm vermischt werden, um einen Düngerschlamm zu schaffen. In den organischen Materialien ist jedoch stets ein Schwefelanteil enthalten, siehe Internetseite (2017) www.Schwefelwasserstoff.de/auftreten.html, insbesondere in Form von gelöstem Schwefelwasserstoffgas H₂S. Durch die Zugabe der im Waschwasser enthaltenen Schwefelsäure wird der Schwefelwasserstoffgasförmig ausgetrieben, bzw. reagieren die Schwefelverbindungen mit der Säure zu Schwefelwasserstoff H₂S, einem Gas, das wegen üblen Geruchs, Gesundheitsgefährdung und korrosiven Eigenschaften nicht in größerer Menge in die Atmosphäre gelangen darf. Hier wäre also eine erneute Gaswäsche erforderlich. Eine Gaswäsche zur Extraktion von Schwefelwasserstoff erfolgt nicht durch Zugabe einer Säure, sondern einer Base, insbesondere von Natronlauge oder Kalilauge, wodurch das Salz Natriumsulfid Na₂S bzw. Kaliumsulfid K₂S entsteht, während das Waschwasser sehr basisch wird.

Durch die Erfindung soll der Nachteil der Freisetzung schädlicher Gase, insbesondere von Ammoniak oder Schwefelwasserstoff, und in weitere Folge auch des Effekts der Schädigung, insbesondere Verätzung der Pflanzen, gemildert werden. Dies wird dadurch erreicht, dass vor Beginn des Ableitens des Waschwassers die Zudosierung der reagierenden Chemikalie gedrosselt, vorzugsweise beendet, wird und die Ableitung des Waschwassers erst dann durchgeführt wird, wenn der pH-Wert des Waschwassers einen akzeptablen Wert angenommen hat, aufgrund fortdauernden In-Kontakt-Bringens des Waschwassers mit dem Gasstrom, wobei das In-Kontakt-Bringen über die Drosselung bzw. das Beenden der Zudosierung hinaus fortgeführt wird. Dieser akzeptable pH-Wert für das Waschwasser ist im Fall der Verwendung des abgeleiteten Waschwassers als Flüssigdünger die dem Fachmann bekannte Verträglichkeitsgrenze der zu düngenden Pflanzen, und im Fall der Beigabe zu den organischen Materialien ein pH-Wert, der zumindest angenähert dem pH-Wert dieser Materialien im Trockner bzw. der Materialien in einem Endlager entspricht. Typischerweise liegt der pH-Wert im Trockner oder Endlager abhängig von den Materialien, z. B. Schweinegülle, Rindergülle, nachwachsende Rohstoffe, zwischen 7 und 8,5, bei Wikipedia wird unter (2017) https://de.wikipedia.org/wiki/G%C3%A4rrest sowohl bei Anlagen für nachwachsende Rohstoffe als auch bei Bioabfallanlagen ein mittlerer pH-Wert von 8,3 genannt. Ein bevorzugter pH-Wert, bei dem man das Waschwasser abzuleiten beginnt, liegt also zwischen pH = 3 (vorzugsweise 5) und 8,6, noch mehr bevorzugt bei 6,5 ± 1 bei der Verwendung als Flüssigdünger oder zwischen 7 und 8,5 (vorzugsweise bei 8,3 ± 1) bei der Rückleitung zum organischen Material, entsprechend den oben genannten Werten.

Durch die erfindungsgemäßen Maßnahmen wird erreicht, dass, durch über die Drosselung der Zudosierung fortdauerndes Kontaktieren des Waschwassers mit dem Gasstrom, das abgeleitete Waschwasser nicht mehr in störender Weise sauer bzw. basisch ist, was einerseits in der Verwendbarkeit als Dünger, und andererseits in der Möglichkeit, ohne die Notwendigkeit eines eigenen Waschwasser-Ausgangsbehälters es dem Ausgangsmaterial, z. B. dem Gärrest, ohne die wesentliche Entstehung von Schwefelwasserstoff zuzugeben, resultiert. Es hat sich herausgestellt, dass durch die Zudosierung der mit dem zu extrahierenden Gas chemisch reagierenden Chemikalie im Waschwasser ein pH-Wert einstellt, der weit außerhalb des Bereichs liegt, der die weitere Verwendung eines solchen Waschwassers für viele Zwecke unmöglich macht. Wird aber, wie in von der Erfindung vorgesehen, das Waschwasser, welches einen nicht-akzeptablen pH-Wert aufweist, über die Drosselung bzw. das Beenden der Zudosierung der mit dem zu extrahierenden Gas chemisch reagierenden Chemikalie hinaus weiterhin mit dem Gasstrom in Kontakt gebracht, führt das fortdauernde Exponieren (oder In-Kontakt-Bringen) des Waschwassers mit dem zu extrahierenden Gas in dem Gasstrom zu einer Einstellung eines pH-Werts im Waschwasser, der die weitere Verwendung des Waschwassers möglich macht. In dieser Ausführungsform führt die fortdauernde Kontaktierung des Waschwassers mit dem Gasstrom zu einer Rückeinstellung des pH-Werts auf eine akzeptable Höhe, welche die Weiterverwendung des abgeleiteten Waschwassers, beispielsweise als Flüssigdünger, ermöglicht.

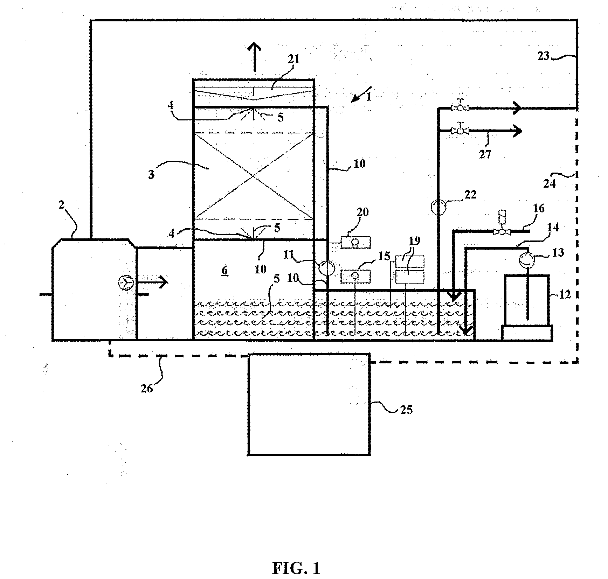

Weitere Einzelheiten, Vorteile und Weiterbildungen der Erfindung ergeben sich aus den Unteransprüchen und der folgenden Beschreibung eines bevorzugten Durchführungsbeispiels unter Bezugnahme auf die Zeichnung. Die einzige Figur zeigt beispielhaft das Schema eines chemischen Abluftwäschers, mit dem das erfindungsgemäße Verfahren bei der Extraktion von Ammoniak aus der Abluft eines Gärrest-Trockners durchzuführen ist.

Das erfindungsgemäße Verfahren wird speziell anhand des Beispiels eines in der Zeichnung schematisch dargestellten Luftwäschers 1 für die Abluft einer Gärresttrocknung einer Biogasanlage beschrieben. Der auch als Gülle bezeichnete Gärrest wird einem Trockner 2 eingegeben, dem der Luftwäscher 1 hinsichtlich der dem Gärrest entzogenen Trocknungs-Abluft nachgeschaltet ist. Durch dem Trockner 2 vorgeschaltete Verdichter wird ein in der Zeichnung durch Pfeile angedeuteter Abluftstrom erzeugt, der vom Trockner 2 in den Luftwäscher 1 strömt. Diese Abluft enthält je nach Gärrestbeschaffenheit und Trocknerleistung etwa 40 bis 100 ppm Ammoniak NH₃, das im Luftwäscher 1 weitmöglichst ausgefiltert werden soll. Im Luftwäscher befinden sich Füllkörper 3, auf die von oben und unten durch Spritzdüsen 4 Waschwasser 5 gesprüht wird, dem Schwefelsäure H₂SO₄ zugesetzt ist und das von den Füllkörpern nach unten in einen Wassersammelbehälter 6 abläuft, von wo es im Kreislauf über Leitungen 10 und eine Umwälzpumpe 11 zu den Spritzdüsen 4 zurückbefördert wird. In das Waschwasser 5 wird laufend 96%ige Schwefelsäure aus einem Vorratstank 12 über eine Membrandosierpumpe 13 und eine Leitung 14 eindosiert, so dass das Waschwasser einen abgesenkten pH-Wert in der Größenordnung von 2 bis 4 hat. Die Säuredosierung wird mittels eines pH-Wert-Sensors 15 beispielsweise zur Erzielung eines Werts von 2,5 geregelt. Die Schwefelsäure entzieht der Abluft das Ammoniak unter Bildung von Ammoniumsulfat (NH₄)₂SO₄, das dann im Waschwasser 5 gelöst vorliegt. Dem Waschwasser 5 wird außer der Schwefelsäure über eine Zuleitung 16 auch noch Frischwasser zugeführt, um Verdunstungsverluste auszugleichen und den Waschwasservorrat nach einem Abpumpen wieder aufzufüllen, was durch Pegelstandsschalter 19 für den Soll- und den Mindest-Pegel geregelt wird. Ein Leitfähigkeits-Messsensor 20 misst laufend die elektrische Leitfähigkeit des umgepumpten Waschwassers 5, um die Konzentration des gelösten Ammoniumsulfats zu prüfen. Die durch den Ammoniakentzug gereinigte Luft entweicht über einen Tropfenabscheider 21.

Durch die laufende Reaktion des Ammoniaks mit der Schwefelsäure reichert sich das saure Waschwasser zunehmend mit dem gelösten Ammoniumsulfat an. Die Wasserlöslichkeit des Ammoniumsulfats beträgt bei 20 °C 754 g/1 (siehe im Internet https://de.wikipedia.org/wiki/Ammoniumsulfat), der einem bestimmter spezifischer Widerstand der Lösung entspricht. Über diesem Löslichkeitswert beginnt das Sulfatsalz auszukristallisieren. Wird nun eine willkürlich festgelegte, noch vor der Auskristallisation des Sulfats liegende Sulfatkonzentration erreicht, so wird durch die Anlagensteuerung ausgelöst das Waschwasser durch eine Abschlämmpumpe 22 abgepumpt. Andernfalls würde eine Kristallisation im Luftwäscher 1 stattfinden und dieser würde mit dem Sulfat zuwachsen. In der Zeichnung sind drei Möglichkeiten des Abpumpziels dargestellt, nämlich über eine Leitung 23 zum Trockner 2, über eine gestrichelt eingezeichnete Leitung 24 zu einem Sammelbehälter 25, dem außerdem über einen Transportweg 26 der getrocknete Gärrest vom Trockner 2 zugeführt wird, und schließlich über eine Leitung 27 zu einem in der Zeichnung nicht dargestellten Sammelbehälter nur für das Waschwasser.

Bei der Weiterbehandlung des Waschwassers ergeben sich nach dem Stand der Technik folgende Schwierigkeiten:
Wenn das Waschwasser über die Leitung 27 zu einem eigenen Sammelbehälter geleitet wird, kann es doch so, wie es ist, also schwefelsäurehaltig, nicht unmittelbar für Düngezwecke verwendet werden, da es die Pflanzen schädigen würde. Es ist also zumindest noch eine Zwischenbehandlung nötig.

Wenn aber das Waschwasser mit seinem pH-Wert von 2 bis 4 über die Leitungen 23 oder 24 mit dem eingedickten Gärrest vermengt wird, sinkt auch der pH-Wert des Gärrestes mit ab. In dem Gärrest befinden sich aber abhängig vom Vergärungs-Ausgangsstoff noch diverse Stoffe, unter anderem Schwefelwasserstoff H₂S, der dort gelöst vorliegt. Durch das Absenken des pH-Wertes des Gärrestes wird der Schwefelwasserstoff gasförmig ausgetrieben. Wegen seines extrem üblen Geruchs kann das Schwefelwasserstoffgas nicht in die Atmosphäre abgegeben werden, auch führt dieses Gas zu beschleunigter Korrosion der Anlagenteile. Also wird nach dem Stand der Technik eine neue Abluftwäsche in Bezug auf das Schwefelwasserstoffgas erforderlich. Wird diese durch die Reaktion mit z. B. Natronlauge durchgeführt, so resultiert wiederum ein für viele Zwecke unbrauchbares, weil stark basisches Waschwasser.

Beim erfindungsgemäßen Verfahren stoppt der Steuerungsmechanismus des Luftwäschers entsprechend dem vom Leitfähigkeits-Messsensor 20 gelieferten Messwert die Zudosierung der Schwefelsäure - bzw. im Fall der Schwefelwasserstoffextraktion der Lauge - rechtzeitig vor dem Abpumpen des sulfathaltigen - bzw. sulfidhaltigen - Waschwassers 5, nämlich wenige Minuten vorher. Der Zeitpunkt des Beginns des Abpumpens wird dann durch den pH-Wert-Sensor 15 gegeben, die vorausliegende Zeitspanne ohne Zudosierung der Schwefelsäure hängt von den Gegebenheiten der Anlage und des Ammoniakgehalts der Abluft ab und wird durch die pH-Wert-Messung bestimmt. Bei einer Anlage ohne laufende pH-Wert-Messung könnte sie auch im Einzelfall experimentell ermittelt werden. Während dieser Zeit zwischen dem Zudosierungsende der Schwefelsäure (bzw. der Lauge) und dem Beginn des Abpumpens wird nach wie vor der Ammoniakstrom (bzw. der Schwefelwasserstoffstrom) im Waschwasser gelöst und dadurch Schwefelsäure (bzw. Lauge) verbraucht, so dass der pH-Wert des Waschwassers schnell ansteigt (bzw. sinkt). Erst wenn ein vorgegebener höherer pH-Wert, z. B. in der Größenordnung von 5.0-8.5 erreicht ist, bevorzugt durch über die Drosselung der Zudosierung fortdauerndes Kontaktieren des Waschwassers mit dem Gasstrom, gibt die Steuerung den Abpumpvorgang frei. Mit diesem höheren pH-Wert ist die Ammoniumsulfatlösung direkt als Dünger verwendbar. Wird sie dem Gärrest zugegeben, so ist der vorgegebene höhere pH-Wert etwa derjenige des Gärrestes, der zuvor gemessen worden ist, mit einer Toleranz in der Größenordnung von ±1. Dadurch, dass nun der Gärrest nicht oder kaum im pH-Wert abgesenkt wird, wird auch kein gasförmiger Schwefelwasserstoff frei.

Während des Abpumpvorgangs kann der die Abluft des Trockners 2 fördernde Verdichter abgeschaltet sein. Nach dem Abpumpen und Einfüllen von frischem Waschwasser wird sofort wieder die Säure-Zudosierung eingeschaltet und dann die Trockner-Abluft eingespeist, und der Luftwäscher 1 arbeitet wieder mit dem niedrigen pH-Wert von 2 bis 4 effektiv weiter.

Da der Lösungssättigungswert oder Kristallisierungspunkt des Ammoniumsulfats als Konzentrations-Prozentzahl bekannt ist, wird die Zudosierung der Schwefelsäure z. B. ½% unter diesem Wert angehalten. Sollten aufgrund der Gegebenheiten des Luftwäschers Bedenken bestehen, ob in der dosierungsfreien Zeit das Ammoniak ausreichend gebunden wird, so kann in dieser Zeitspanne der dem Trockner zugeordnete Lufttransport-Verdichter mit geringerer Leistung gefahren werden, und/oder die Schwefelsäure-Zudosierung nicht plötzlich, sondern stetig oder schrittweise verringert werden.

## Patentansprüche

1. Verfahren zum Betrieb eines chemischen Gaswäschers (1), der von einem mehrere Gase enthaltenden Gasstrom durchsetzt wird, zum Entzug eines aus dem Gasstrom zu extrahierenden Gases, wobei man den Gasstrom mit einem Waschwasser (5) kontaktiert, dem laufend eine mit dem zu extrahierenden Gas chemisch reagierende Chemikalie zudosiert wird, die einen pH-Wert außerhalb des Bereichs 4 bis 10 hat, und die dann mit dem zu extrahierenden Gas unter Bildung eines im Waschwasser gelösten Salzes reagiert, und man das Waschwasser bei Erreichen einer Salzkonzentration, die noch vor dem Auskristallisieren des Salzes liegt, zumindest teilweise ableitet, **dadurch gekennzeichnet, dass** man vor Beginn des Ableitens des Waschwassers (5) die Zudosierung der reagierenden Chemikalie drosselt und die Ableitung des Waschwassers erst dann durchführt, wenn der pH-Wert des Waschwassers, durch über die Drosselung der Zudosierung fortdauerndes Kontaktieren des Waschwassers mit dem Gasstrom, einen Wert angenommen hat, der für Düngezwecke biologisch unbedenklich ist, wobei man die Ableitung des Waschwassers (5) durchführt, wenn sein pH-Wert einen Wert zwischen 3 und 8,5 angenommen hat, und man das abgeleitete Waschwasser in einen Sammelbehälter leitet.

2. Verfahren nach Anspruch 1, **dadurch gekennzeichnet, dass** man einen Gasstrom wäscht, der aus einem organischen Material austritt.

3. Verfahren zum Betrieb eines chemischen Gaswäschers (1), der von einem mehrere Gase enthaltenden, aus einem Lagerort (2) organischer Materialien austretenden Gasstrom durchsetzt wird, zum Entzug eines aus dem Gasstrom zu extrahierenden Gases, wobei man den Gasstrom mit einem Waschwasser (5) kontaktiert, dem laufend eine mit dem zu extrahierenden Gas chemisch reagierende Chemikalie zudosiert wird, die einen pH-Wert außerhalb des Bereichs 4 bis 10 hat, und die dann mit dem zu extrahierenden Gas unter Bildung eines im Waschwasser gelösten Salzes reagiert, und man das Waschwasser bei Erreichen einer Salzkonzentration, die noch vor dem Auskristallisieren des Salzes liegt, zumindest teilweise ableitet, **dadurch gekennzeichnet, dass** man vor Beginn des Ableitens des Waschwassers (5) die Zudosierung der reagierenden Chemikalie drosselt und die Ableitung des Waschwassers erst dann durchführt, wenn der pH-Wert des Waschwassers, durch über die Drosselung der Zudosierung fortdauerndes Kontaktieren des Waschwassers mit dem Gasstrom, einen Wert angenommen hat, der dem pH-Wert der organischen Materialien entspricht, und man das abgeleitete Waschwasser in einen Sammelbehälter leitet.

4. Verfahren nach Anspruch 3, **dadurch gekennzeichnet, dass** man das abgeleitete Waschwasser in den Sammelbehälter leitet, in dem sich das den Gasstrom abgegeben habende organische Material befindet.

5. Verfahren nach einem der Ansprüche 2 bis 4, **dadurch gekennzeichnet, dass** das organische Material der Gärrest im Trockner einer Biogasanlage, und der Gasstrom der Abluftstrom des Trockners ist.

6. Verfahren nach einem der Ansprüche 1 bis 5, **dadurch gekennzeichnet, dass** das zu extrahierende Gas Ammoniak NH₃ und die damit reagierende zudosierte Chemikalie eine Säure ist, die mit dem Ammoniak unter Bildung eines Ammoniumsalzes reagiert.

7. Verfahren nach Anspruch 6, **dadurch gekennzeichnet, dass** die Säure Schwefelsäure H₂SO₄ ist.

8. Verfahren nach einem der Ansprüche 1 bis 4, **dadurch gekennzeichnet, dass** das zu extrahierende Gas Schwefelwasserstoff H₂S und die damit reagierende zudosierte Chemikalie eine wässerige Alkalimetallhydroxydlösung ist.

9. Verfahren nach einem der Ansprüche 3 bis 8, **dadurch gekennzeichnet, dass** man die Ableitung des Waschwassers (5) durchführt, wenn sein pH-Wert einen Wert zwischen 3 und 8,5 angenommen hat.

10. Verfahren nach Anspruch 9, **dadurch gekennzeichnet, dass** man die Ableitung des Waschwassers durchführt, wenn sein pH-Wert einen Wert zwischen 5 und 8,3 angenommen hat.

11. Verfahren nach Anspruch 10, **dadurch gekennzeichnet, dass** man die Ableitung des Waschwassers durchführt, wenn sein pH-Wert einen Wert von 6,5 ± 1 angenommen hat.

12. Verfahren nach Anspruch 10, **dadurch gekennzeichnet, dass** man die Ableitung des Waschwassers durchführt, wenn sein pH-Wert einen Wert zwischen 7 und 8,5 angenommen hat.

13. Verfahren nach einem der Ansprüche 1 bis 12, **dadurch gekennzeichnet, dass** man die Zudosierung der reagierenden Chemikalie zum Zeitpunkt des Beginns der Drosselung bis zum Ende des Ableitens des Waschwassers (5) unverzüglich beendet.

## Claims

1. A method for operating a chemical gas scrubber (1) through which a stream of gas containing a plurality of gases passes in order to withdraw a gas to be extracted from the stream of gas, wherein the stream of gas is contacted with a scrubbing water (5) into which a chemical which chemically reacts with the gas to be extracted and which has a pH value outside the range 4 to 10 is continuously metered, and which then reacts with the gas to be extracted with the formation of a salt which is dissolved in the scrubbing water, and when a salt concentration is reached which is prior to crystallization of the salt, at least a portion of the scrubbing water is discharged, **characterized in that** prior to commencing discharge of the scrubbing water (5), metering-in of the reacting chemical is reduced and discharge of the scrubbing water is only then carried out when, via continuing contact of the scrubbing water with the stream of gas during reduction of the metering, the pH value of the scrubbing water has assumed a value which is biologically harmless for the purposes of fertilization, wherein the discharge of the scrubbing water (5) is carried out when its pH value has assumed a value of between 3 and 8.5, and the discharged scrubbing water is fed into a collecting container.

2. The method according to claim 1, **characterized in that** a stream of gas which emerges from an organic material is scrubbed.

3. A method for operating a chemical gas scrubber (1) through which a stream of gas containing a plurality of gases emerging from a storage location (2) for organic material passes, in order to withdraw a gas to be extracted from the stream of gas, wherein the stream of gas is contacted with a scrubbing water (5) into which a chemical which chemically reacts with the gas to be extracted and which has a pH value outside the range 4 to 10 is continuously metered, and which then reacts with the gas to be extracted with the formation of a salt which is dissolved in the scrubbing water, and when a salt concentration is reached which is prior to crystallization of the salt, at least a portion of the scrubbing water is discharged, **characterized in that** prior to commencing discharge of the scrubbing water (5), metering-in of the reacting chemical is reduced and discharge of the scrubbing water is only then carried out when, via continuing contact of the scrubbing water with the stream of gas during reduction of the metering, the pH value of the scrubbing water has assumed a value which corresponds to the pH value of the organic materials, and the discharged scrubbing water is fed into a collecting container.

4. The method according to claim 3, **characterized in that** the discharged scrubbing water is fed into the collecting container in which the organic material that has given off the stream of gas is located.

5. The method according to any one of claims 2 to 4, **characterized in that** the organic material is the fermentation residue in the dryer of a biogas plant and the stream of gas is the exhaust stream from the dryer.

6. The method according to any one of claims 1 to 5, **characterized in that** the gas to be extracted is ammonia, NH₃, and the chemical reacting therewith which is metered-in is an acid which reacts with the ammonia with the formation of an ammonium salt.

7. The method according to claim 6, **characterized in that** the acid is sulphuric acid, H₂SO₄.

8. The method according to any one of claims 1 to 4, **characterized in that** the gas to be extracted is hydrogen sulphide, H₂S, and the chemical reacting therewith which is metered in is an aqueous alkali metal hydroxide solution.

9. The method according to any one of claims 3 to 8, **characterized in that** the discharge of the scrubbing water (5) is carried out when its pH value has assumed a value of between 3 and 8.5.

10. The method according to claim 9, **characterized in that** the discharge of the scrubbing water is carried out when its pH has assumed a value of between 5 and 8.3.

11. The method as claimed in claim 10, **characterized in that** the discharge of the scrubbing water is carried out when its pH value has assumed a value of 6.5 ± 1.

12. The method according to claim 10, **characterized in that** the discharge of the scrubbing water is carried out when its pH value has assumed a value of between 7 and 8.5.

13. The method according to any one of claims 1 to 12, **characterized in that** metering-in of the reacting chemical is stopped without delay at the time of commencing reduction to the end of discharge of the scrubbing water (5).

## Revendications

1. Procédé d'exploitation d'un laveur de gaz chimique (1), qui est traversé par un courant gazeux contenant plusieurs gaz, pour prélever un gaz destiné à être extrait du courant gazeux, dans lequel on met en contact le courant gazeux avec une eau de lavage (5), à laquelle on ajoute en continu un composé chimique subissant une réaction chimique avec le gaz à extraire, composé chimique qui a un pH extérieur à la plage de 4 à 10, et qui ensuite réagit avec le gaz à extraire avec formation d'un sel dissous dans l'eau de lavage, et on dérive au moins partiellement l'eau de lavage lorsqu'on atteint une concentration du sel n'ayant pas encore atteint la recristallisation du sel, **caractérisé en ce que**, avant le début de la dérivation de l'eau de lavage (5), on restreint l'addition du composé chimique réagissant, et on ne met en œuvre la dérivation de l'eau de lavage que lorsque le pH de l'eau de lavage a, du fait d'une mise en contact de l'eau de lavage avec le courant gazeux, qui se poursuit au-delà de la restriction de l'addition, atteint une valeur qui d'un point de vue biologique est inoffensive à des fins d'utilisation comme engrais, la dérivation de l'eau de lavage (5) étant mise en œuvre lorsque son pH a atteint une valeur entre 3 et 8,5, et l'eau de lavage dérivée est envoyée dans un réservoir.

2. Procédé selon la revendication 1, **caractérisé en ce qu'**on lave un courant gazeux qui émane d'un matériau organique.

3. Procédé d'exploitation d'un laveur de gaz chimique (1), qui est traversé par un courant gazeux contenant plusieurs gaz, émanant d'un dépôt (2) de matériaux organiques, pour prélever un gaz à extraire du courant gazeux, procédé dans lequel on met le courant gazeux en contact avec une eau de lavage (5), à laquelle on ajoute en continu un composé chimique subissant une réaction chimique avec le gaz à extraire, composé chimique qui a un pH à l'extérieur de la plage de 4 à 10, et qui ensuite réagit avec le gaz à extraire avec formation d'un sel dissous dans l'eau de lavage, et on dérive au moins partiellement l'eau de lavage lorsqu'on atteint une concentration du sel n'ayant pas encore atteint la recristallisation du sel, **caractérisé en ce que**, avant le début de la dérivation de l'eau de lavage (5), on restreint l'addition du composé chimique réagissant et on ne met en œuvre la dérivation de l'eau de lavage que lorsque le pH de l'eau de lavage a, du fait d'une mise en contact de l'eau de lavage avec le courant gazeux, qui se poursuit au-delà de la restriction de l'addition, atteint une valeur qui correspond au pH des matériaux organiques, et l'eau de lavage dérivée est envoyée dans un réservoir.

4. Procédé selon la revendication 3, **caractérisé en ce qu'**on envoie l'eau de lavage dérivée dans un réservoir dans lequel se trouve le matériau organique ayant cédé le courant gazeux.

5. Procédé selon l'une des revendications 2 à 4, **caractérisé en ce que** le matériau organique est le résidu de fermentation dans le séchoir d'une installation de biogaz, et le courant gazeux est l'effluent gazeux du séchoir.

6. Procédé selon l'une des revendications 1 à 5, **caractérisé en ce que** le gaz à extraire est l'ammoniac NH₃, et le composé chimique ajouté, réagissant avec ce dernier, est un acide qui réagit avec l'ammoniac avec formation d'un sel d'ammonium.

7. Procédé selon la revendication 6, **caractérisé en ce que** l'acide est l'acide sulfurique H₂SO₄.

8. Procédé selon l'une des revendications 1 à 4, **caractérisé en ce que** le gaz à extraire est le sulfure d'hydrogène H₂S, et le composé chimique ajouté réagissant avec ce dernier est une solution aqueuse d'hydroxyde d'un métal alcalin.

9. Procédé selon l'une des revendications 3 à 8, **caractérisé en ce qu'**on met en œuvre la dérivation de l'eau de lavage (5) lorsque son pH a atteint une valeur entre 3 et 8,5.

10. Procédé selon la revendication 9, **caractérisé en ce qu'**on met en œuvre la dérivation de l'eau de lavage lorsque son pH a atteint une valeur entre 5 et 8,3.

11. Procédé selon la revendication 10, dans lequel on met en œuvre la dérivation de l'eau de lavage lorsque son pH a atteint une valeur de 6,5 ± 1.

12. Procédé selon la revendication 10, **caractérisé en ce qu'**on met en œuvre la dérivation de l'eau de lavage lorsque son pH a atteint une valeur entre 7 et 8,5.

13. Procédé selon l'une des revendications 1 à 12, **caractérisé en ce qu'**on immédiatement fin à l'addition du composé chimique réagissant au moment du début de la restriction, jusqu'à la fin de la dérivation de l'eau de lavage (5).
